# EUROPEAN PATENT APPLICATION

(11) **EP 1 304 820 A1**
(43) Date of publication of application: **23.04.2003**
(21) Application number: 01945798.5
(22) Date of filing: 03.07.2001
(51) Int. Cl.: H04B 10/18, H04B 10/02, G02F 1/01

(54) **OPTICAL TRANSMITTER AND OPTICAL FIBER TRANSMISSION SYSTEM HAVING THE SAME**

(30) Priority: 06.07.2000 JP 2000205458
(71) Applicant: NEC Corporation, Minato-ku, Tokyo 108-8001 (JP)
(72) Inventor: YANO, Yutaka, c/o NEC Corporation, Tokyo 108-8001 (JP)
(74) Representative: Betten & Resch
(86) International application number: JP0105763
(87) International publication number: WO02005464

(57) **Abstract**

An optical transmitter of CS- RZ modulation for further increase the SPM-GVD resistance and an optical fiber transmission system having the same are disclosed. The optical transmitter comprises a carrier source, a data modulating section for intensity-modulating the carrier with a data signal, a clock modulating section for amplitude-modulating the carrier so that the phase of the carrier is inverted for every one-bit slot of the data signal. The optical transmitter is characterized in that the carrier is given a prechirp by the carrier source or the data modulating section.

## Description

### TECHNICAL FIELD

The present invention relates to an optical fiber transmission system and an optical transmitter used in the system.

### BACKGROUND ART

### (SPM-GVD Degradation)

The intensity modulation- direct detection method is widely adopted in existing fiber optic telecommunication systems. According to the method, digital information is placed on intensity of signal light and the intensity is directly detected by an optical power detector. Besides, the capacity of the systems is enlarged by wavelength-division multiplexing. In the transmission systems, chromatic dispersion (GVD: Group Velocity Dispersion) in an optical fiber and self-phase modulation (SPM) effect in combination induces a phenomenon called SPM-GVD effect. SPM is one of the nonlinear optical effects arise in the optical fiber. A waveform distortion resulting from the SPM-GVD effect is a main factor in transmission degradation. Higher power of the signal light in the optical fiber encourages the degradation due to the nonlinear optical effects such as the SPM-GVD effect.

### (Optical SNR Degradation and Trade-Off in the Output Power of Repeaters)

Another main factor in transmission degradation is accumulation of optical noises called optical SNR (Signal to Noise Ratio) degradation attendant on optical amplifying relay. This deteriorating effect is increased as input power to an optical amplifying repeater becomes lower. Thus, provided that section losses between respective repeaters are constant, there is an optimal value for the output power of the repeaters. Expressing the performance of a transmission system in terms of bit-error-rate (BER), BER is deteriorated by the nonlinear optical effects when the repeater output power is excessive. On the other hand, when the repeater output power is insufficient, BER is deteriorated by the optical SNR degradation. In this manner, there are two limiting factors showing opposite tendencies in the output power of the repeaters. Therefore, it is a technical subject how to loosen the trade-off relation and how to increase allowable loss in repeater sections.

### (Chirp)

In the optical communication field, phase change according to intensity change in the carrier (light) is referred to as chirp. SPM is also a kind of the chirp, and its direction in most mediums like the optical fiber is expressed as Kerr coefficient n₂ > 0, that is, the direction in which a phase-delay in the carrier is increased as instantaneous intensity gets higher. Hereinafter the direction of the chirp is indicated by whether the chirp is in a SPM direction or in a counter- SPM direction on the basis of the phase shift direction of SPM. Besides, advance chirp in a transmitter is referred to as prechirp.

In the history of the development of optical transmission techniques, the prechirp was initially studied as one of the dispersion compensation techniques (e.g. Saito et al., "Prechirp Technique for Disperson Compensation for a High-Speed Long-Span Transmission", Photon. Technol. Lett., p.74, 1991). Since the high-integrity dispersion compensating device was not well-developed in those days, the prechirp technique was under review as one of the means to counter the waveform distortion due to accumulations of chromatic dispersion (GVD). However, with the emergence of excellent dispersion compensating devices such as dispersion compensating fiber, the prechirp technique ceased to be employed for the dispersion compensation.

### (Actual Fiber Dispersion Value and SPM-GVD Effect)

The degree of SPM-GVD degradation varies according to the chromatic dispersion value of each optical fiber line. As is known for the mechanism of optical soliton transmission, when an SPM chirp occurs during the transmission of light pulses in abnormal dispersion, the pulses are compressed. As pulse form gets sharpened due to the compression, SPM is more easily induced. On the contrary, in the case of propagation in normal dispersion, SPM is restrained because the pulses are spread and flattened by the SPM chirp. Therefore, transmission lines with normal dispersion suffer less SPM-GVD degradation unless the pulse compression effect by SPM is in positive use as in the soliton transmission.

Incidentally, in capacity enlargement techniques by the wavelength-division multiplexing (WDM), which have been rapidly commercialized in recent years, there is the problem of crosstalk between channels caused by the nonlinear effect of the optical fiber. As an effective measure to restrain the crosstalk, in general, the dispersion value of the optical fiber is increased to make a big difference in the propagation velocity of the respective wavelength channels.

In the vicinity of 1.55µm band that is used most in the optical transmission system, silica (SiO₂) glass fibers possess the characteristic of abnormal material dispersion (the shorter wavelength provides the faster propagation velocity). The dispersion value is about +17ps/ nm/ km, and the optical fibers that maintain this material dispersion property are called single-mode-fiber (SMF) (ITU-T Recommendations G.652). On the other hand, optical fibers called dispersion shift fiber are also in practical use. In the dispersion shift fiber, large normal dispersion is generated by structural dispersion to counteract the material dispersion. The structural dispersion, however, only negates the material dispersion at the best, and it is technically difficult to give the fiber a large normal dispersion value. Additionally, in the case of producing the large normal dispersion by the structural dispersion, the cross-sectional area of the optical fiber core gets smaller. Accordingly, there arises a problem that the nonlinear optical effects are easily induced.

To sum up, it is preferable that line fibers are provided with the normal dispersion value in the view of the suppression of the SPM-GVD degradation. On the other hand, the optical fiber with a large dispersion value required for WDM is limited to SMF being an abnormal dispersion fiber, which makes it more important to take measures against the SPM-GVD degradation.

### (The Operation of Two-Beam Interferometer Type Optical Modulator)

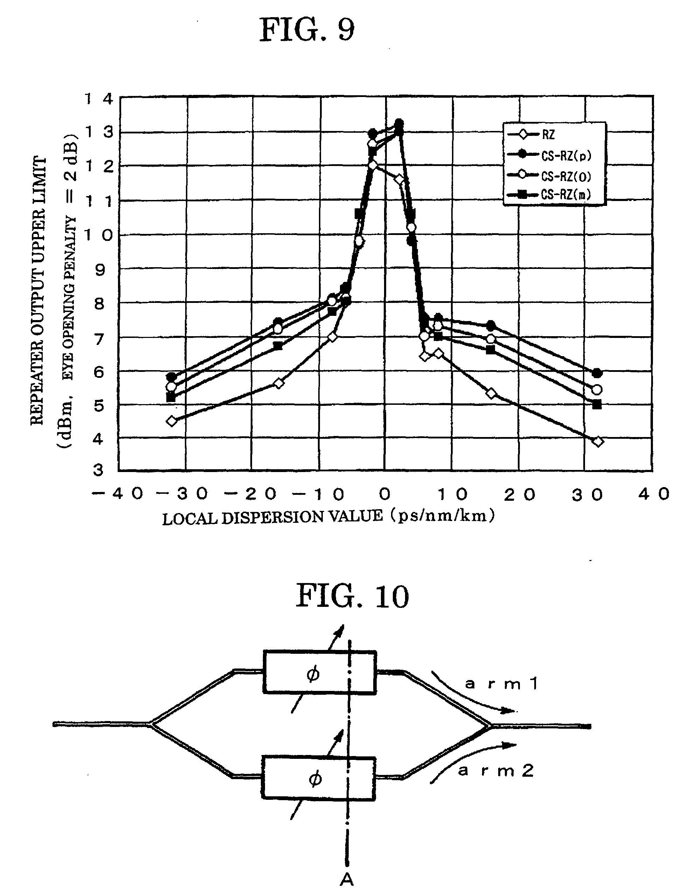

In the following, a description will be given of an LN (LiNbO₃) modulator much used in the embodiments of the present invention. The modulator has the composition of a two-beam interferometer (Mach-Zehnder interferometer) as shown in Fig. 10. In the modulator, two light waves, each of which has undergone a phase shift according to an drive signal at the phase-modulating section of each arm, interfere with one another and become output signal light.

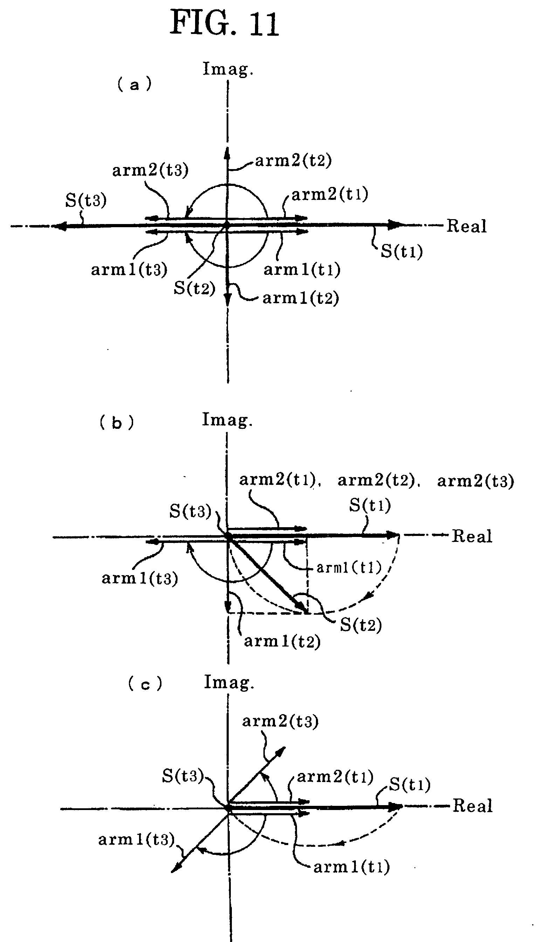

Fig. 11(a) - (c) are diagrams showing the operation by phasor. The distance from the origin (the center of each diagram) indicates amplitude. On the other hand, having set the positive direction of a real axis (real) to zero, a phase shift amount is designated by the arc of rotation from zero. The rotation in a clockwise direction indicates a phase delay. Thin arrows denote the lights passing through arm 1 (t) and arm 2 (t), and heavy arrows denote a composite vector thereof as interference output light S (t). Next, state transition will be described by following time t1, t2 to t3. At the point of starting point t1, the vectors of arm 1 (t1) and arm 2 (t1) are in unity, and composite vector S (t1) is at its maximum. In other words, the power transmittance is at its maximum in the modulator as a whole.

Fig. 11(a) is a diagram for explaining the operation of push-pull-driven chirpless modulation. Arm 1 and arm 2 are driven by a pair of complementary electrical signals. The pair of complementary electrical signals are two electrical signals a sum of which is invariable. As to the actual method for generating the pair, a pair of electrical signals each having a polarity opposite to each other can be obtained by using a inverting amplifier or a delay line in the case of using a narrowband signal as a clock signal.

With the push-pull drive, the lights of both the arm shift in a balanced manner. Consequently, the composite vector traces on the real axis, and a phase rotation (= chirp) does not occur. When each light phase-shifts from 0 to π/2 (rad) (t1 to t2), composite vector S (t2) becomes zero. Fig. 11(a) also illustrates the state when each light further phase-shifts to π (rad). When the lights have passed π/2, light power transmittance is increased again and, eventually, the composite vector shifts to composite vector S (t3) which is the same as composite vector S (t1) in intensity and opposite in phase.

Fig. 11(b) is a diagram showing the state where only arm 1 in Fig. 11(a) is shifted from 0 to π (rad) so that the light power transmittance is decreased from its maximum to minimum. In Fig. 11(b), a midway point of the shift (t2) is also illustrated. In this case, the composite vector shifts toward zero in an arc accompanied by a phase rotation according to intensity, namely, chirp. Thus, the chirp occurs when the ratio of the phase shift amounts of arm 1 and arm 2 does not stand at 1 to 1.

Fig. 11(c) is a diagram showing the case where the ratio of the phase shift amounts of arm 1 and arm 2 takes the middle of those in Figs. 11(a) and 11(b)

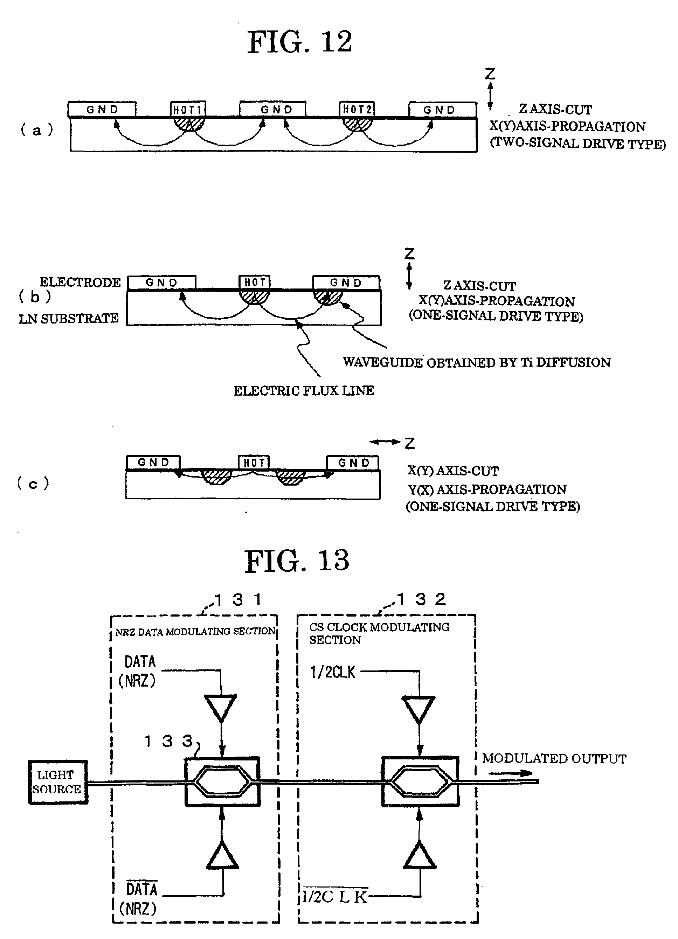

As can be seen in Fig. 11(a) to (c), the ratio of the phase shift amounts of the respective arms defines the chirp. In the following, a description will be given of how to control the ratio of the phase shift amounts in an actual LiNbO₃ (LN) modulator in reference with Fig. 12. Fig. 12(a) to (c) shows a frame format of a Mach-Zehnder interferometer formed on a LN substrate, being taken on line (A) of Fig. 10. In the LN substrate, Z axis is provided with a high electro-optic coefficient as compared to X and Y axes with respect to crystal orientation, and the LN substrate is generally constructed so that modulating electric field is applied along Z axis.

Fig. 12(a) is a sectional view showing the configuration of a "Z axis-cut, X (Y) axis-propagation (two-signal driven)" modulator used in a conventional CS-RZ transmitter. As shown in Fig. 10, the modulator has a degree of freedom to perform independent phase shifts for the two arms. In the conventional CS-RZ transmitter, the chirpless modulation as shown in Fig. 11(a) is implemented by inputting a pair of complementary electrical signals to the arms.

Fig. 12(b) is a sectional view showing the configuration of a "Z axis-cut, X (Y) axis-propagation (one-signal driven)" modulator most widely used today. In this configuration, electric field opposite in direction to a HOT pole is partly applied to a waveguide beneath a GND pole. The phase shifts in the respective arms provide opposite phases although the amplitudes are imbalanced, resulting in the modulating operation as shown in Fig. 11(c). With this configuration, output light undergoes the phase shift (chirp) involved in intensity modulation.

In the general usage of the LN modulator, the modulator is operated in such a manner that its light power transmittance is decreased from the maximum to minimum. This configuration is preferred mainly by reason that less drive signal amplitude (referred to as V π) is required to decrease the light power transmittance from the maximum to minimum as compared to the configuration of Fig. 12(a) for performing the modulation as shown in Fig. 11(b).

Fig. 12(c) is a sectional view showing the configuration of an "X (Y) axis-cut, Y (X) axis-propagation (one-signal driven)" modulator. The "X (Y) axis-cut, Y (X) axis-propagation" means "X axis-cut, Y axis-propagation" or "Y axis-cut, X axis-propagation". With this configuration, mutually complementary phase shifts can be carried out in the two arms by only one drive signal. In other words, the chirpless modulation can be performed as in the case of Fig. 12(a). However, it is impossible to perform independent phase shifts in the respective arms.

### (CS - RZ)

There are differences in the degree of waveform degradation by SPM-GVD depending on modulation methods. There has been proposed CS- RZ (Carrier-Suppressed Return-to-Zero) modulation as a modulation method which is less apt to cause the SPM-GVD degradation by Miyamoto et al., NTT (Y. Miyamoto et al., "320 Gbit/s (8 × 40 Gbit/s) WDM transmission over 367-km zero-dispersion-flattened line with 120-km repeater spacing using carrier-suppressed return-to-zero pulse format", Optical Amplifiers and its Applications, PDP, 1999).

Fig. 13 is a diagram showing the configuration of a modulator to which the method is applied. The modulator is separated into a data modulating section 131 and a clock modulating section 132. Each section is provided with a push-pull type LiNbO₃ (LN) modulator that requires two drive signals as an optical modulator. The respective LN modulators are driven by a pair of complementary electrical signals, and output chirpless optical modulation signals.

In the data modulating section 131, the LN modulator is driven by a pair of complementary data signals in NRZ (Non-Return-to-Zero) code.

In the clock modulating section 132, the LN modulator is driven by a pair of complementary clock signals. Besides, the frequency of the signals is set to a half of bit rate frequency. For example, in the case of a bit rate of 40Gb/s, 20GHz clock signals are used as the drive signals. Hereinafter a clock signal of bit rate frequency is referred to as CLK, and a clock signal whose frequency is a half of the bit rate frequency is referred to as 1/2 CLK.

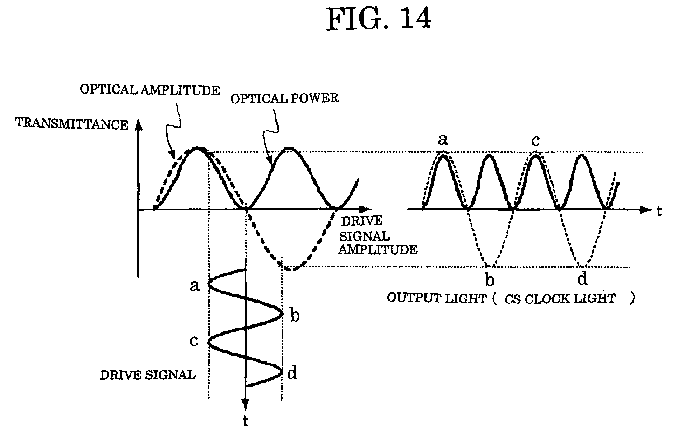

Fig. 14 is a diagram showing modulating operation when a bias point, namely, setting at the time of 0V input, of the LN modulator used in the clock modulating section 132 is set to the point where light becomes off. Assuming that light input is CW (Continuous Wave) light for the sake of simplicity, the frequency of the clock pulse of modulated output light is twice of input clock frequency in terms of power, and the phase is reversed with respect to each 1 bit. In the view of the spectrum of the light clock signal, a carrier is suppressed. Thus, the light clock signal is called CS (Carrier-Suppressed) clock signal.

By connecting the NRZ data modulating section 131 and CS clock modulating section 132 in series, logical product between the modulators are obtained, and digital information based on the presence of pulse is placed on a clock pulse train whose phase is reversed with respect to each 1 bit. While CS clock modulation is carried out after data modulation in Fig. 13, the same modulated light can be attained in the opposite order.

A CS-RZ modulation signal has three symbols: 1, 0 and -1. The signal amplitude is standardized as 1. 1 and -1 indicates reversed phase relation. When performing direct demodulation (square-law detection) of the signal with the use of an optical power detector, 1 and -1 are equated with each other, thus original binary signals can be obtained.

The CS-RZ modulation induces less SPM-GVD degradation as compared to the conventional RZ modulation. Hereinafter resistance against the SPM-GVD waveform degradation is referred to as SPM-GVD resistance.

The configuration of a transmitter-receiver for adopting the CS-RZ modulation is not largely different from the configuration of a transmitter-receiver performing the ordinal RZ modulation. Therefore, there is no rapid progress in manufacturing technique for the transmitter-receiver, which facilitates the introduction of the method.

### PROBLEMS THAT THE INVENTION IS TO SOLVE

Although the SPM-GVD resistance can be increased by the conventional CS-RZ modulation as compared to the ordinary RZ modulation, further improvement in the CS-RZ modulation is desired. It is therefore an object of the present invention to provide an optical transmitter for adopting the CS-RZ modulation to increase the SPM-GVD resistance, and an optical fiber transmission system having the same.

### DISCLOSURE OF THE INVENTION

In accordance with an aspect of the present invention, there is provided an optical transmitter comprising: a carrier source for generating a carrier; a data modulating section for intensity-modulating the carrier with a data signal; and a clock modulating section for amplitude-modulating the carrier so that the phase of the carrier is inverted for every one-bit slot of the data signal; wherein the carrier is given a prechirp by the carrier source or the data modulating section.

In accordance with another aspect of the present invention, in the optical transmitter, the direction of the prechirp is opposite to that of a chirp resulting from self-phase modulation (SPM) effect produced in an optical fiber line.

In accordance with another aspect of the present invention, in the optical transmitter, the waveform of the data signal is in conformity with the NRZ modulation format.

In accordance with another aspect of the present invention, in the optical transmitter, the waveform of the data signal is in conformity with the RZ modulation format.

In accordance with another aspect of the present invention, in the optical transmitter, the data modulating section includes a chirp-giving two-beam interferometer type optical modulator.

In accordance with another aspect of the present invention, in the optical transmitter, the chirp-giving two-beam interferometer type optical modulator is built up on a LiNbO₃ substrate.

In accordance with another aspect of the present invention, in the optical transmitter, the chirp-giving two-beam interferometer type optical modulator is built up on an optical semiconductor substrate.

In accordance with another aspect of the present invention, in the optical transmitter, the data modulating section includes a chirp-giving electroabsorption (EA) intensity modulator.

In accordance with another aspect of the present invention, in the optical transmitter, the clock modulating section includes a push-pull-driven two-beam interferometer type optical modulator.

In accordance with another aspect of the present invention, in the optical transmitter, the push-pull-driven two-beam interferometer type optical modulator is built up on a LiNbO₃ substrate.

In accordance with another aspect of the present invention, in the optical transmitter, the push-pull-driven two-beam interferometer type optical modulator is built up on an optical semiconductor substrate.

In accordance with another aspect of the present invention, there is provided an optical fiber transmission system, which is an optical amplifying relay transmission system comprising: the optical transmitter; optical fibers for transmitting light projected from the optical transmitter; an optical amplifying repeaters for relaying the light between the optical fibers; and an optical receiver for receiving the light transmitted through the optical fibers; wherein the local chromatic dispersion with respect to the wavelength of signal light in the optical fibers is non zero; and a dispersion-arranged transmission line, which is controlled so that the amount of cumulative chromatic dispersion from the optical transmitter to the optical receiver is approximately zero, is adopted.

### OPERATION

In accordance with the present invention, to achieve the above-mentioned improvement, phase modulation (prechirp) is carried out according to intensity transformation at the data modulating section. In a transmission line with a relatively large dispersion value, which is becoming a commonly used WDM (Wavelength Division Multiplexing) communication fiber, it was found out by a transmission simulation that the SPM-GVD resistance can be increased when giving the prechirp in the opposite direction of SPM at the data modulating section. On the other hand, it was also realized that the prechirp performed at the CS clock modulating section was undesirable for its increasing the SPM-GVD degradation. Consequently, in the improved configuration of the optical transmitter, the data modulating section is replaced by a chirp-giving type one while the CS clock modulating section is basically unchanged from the configuration of the prior art. Next, operation will be explained by taking an example in which the NRZ modulation is employed as a modulation format of the data modulating section. Incidentally, the RZ modulation is also applicable as a modulation format.

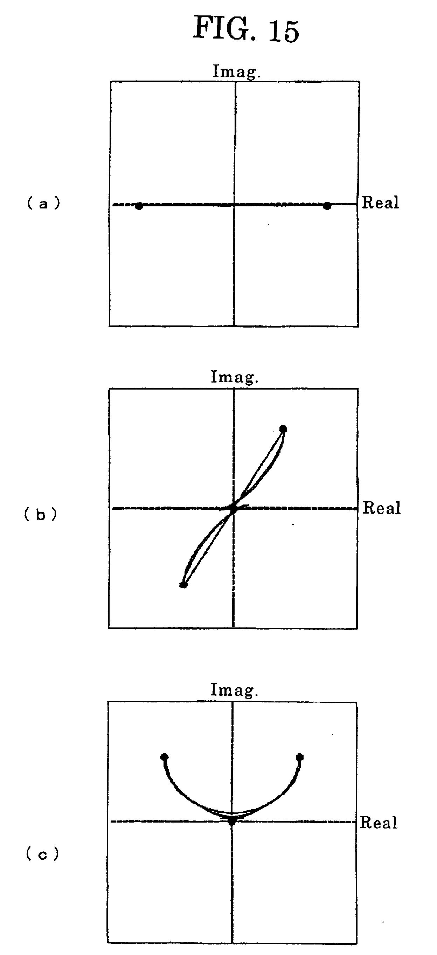

In the following, a description will be given of the difference in the operation of the prechirp between the data modulating section and CS clock section. Fig. 15(a) to (c) shows conditions where various prechirps are performed in phasor diagrams as with Fig. 11. In Fig. 15, only the vector trace of modulated output light is plotted. Black spots indicate the midpoint of bit slots. Since the chirp by the LN modulator is a phase shift in proportion to light intensity, the vector trace is plotted in an arc in Fig. 15.

Fig. 15(a) is a diagram showing the case of a conventional CS-RZ modulation signal. In the CS-RZ modulation, the signal has symbols 1 and -1, and the chirp does not take place.

Fig. 15(b) is a diagram showing the case where the NRZ modulation is carried out by the LN modulator, which is operated so as to give the prechirp in the opposite direction of SPM at the NRZ modulating section under the CS-RZ modulation setup. In this case, when the amplitude of a signal is shifted from 1 to -1 or -1 to 1, the chirp is not given. Meanwhile, only when the amplitude is shifted from 0 to ± 1 or ± 1 to 0, the prechirp is given. Besides, it is also observed that the direction of the chirp corresponds to the direction of movement of the phase according to an increase in signal light.

Fig. 15(c) is a diagram showing the case where the clock modulation is carried out by the LN modulator at the CS clock modulating section under the CS-RZ modulation setup, which is operated in the same manner as in the case of Fig. 15(b). In this case, the direction of the chirp when the amplitude of an optical signal is shifted between 0 and 1 (0 ←→ 1) is opposite to the direction of the chirp when it is shifted between 0 and -1 (0 ←→ -1). Under such circumstances, the improvement of the SPM-GVD resistance cannot be expected. In addition, as is evident from the phasor diagram not being in symmetry about the origin, the deviations are produced in the plus and minus amplitudes. Consequently, the carrier is not sufficiently suppressed.

As is appreciated from the foregoing, in the case of adopting the CS-RZ modulation, it is desirable that the prechirp is given at the data modulating section, not at the CS clock modulating section.

### BRIEF DESCRIPTION OF THE DRAWINGS

Fig. 1 is a block diagram showing the configuration of an optical transmitter according to the first embodiment of the present invention;
Fig. 2 is a block diagram showing the configuration of an optical transmitter according to the second embodiment of the present invention;
Fig. 3 is a block diagram showing the configuration of an optical transmitter according to the third embodiment of the present invention;
Fig. 4 is a block diagram showing the configuration of an optical transmitter according to the fourth embodiment of the present invention;
Fig. 5 is a block diagram showing a model of a transmission system for simulating the embodiments of the present invention;
Fig. 6 is a graph showing repeater output power vs. eye opening penalty characteristic for explaining improved points by the first to forth embodiments of the present invention;
Figs. 7(a), 7(b) and 7(c) are graphs showing post-transmission eye patterns at the repeater output power of +9dBm in Fig. 6 according to (a) RZ modulation, (b) CS-RZ modulation and (c) chirp-giving CS-RZ modulation, respectively;
Fig. 8 is a graph showing repeater output power vs. eye opening penalty characteristic with respect to a normal dispersion fiber for explaining improved points in the present invention;
Fig. 9 is a graph showing local dispersion value vs. repeater output upper limit for explaining improved points in the present invention;
Fig. 10 is a block diagram showing the configuration of a two-beam interferometer type optical modulator;
Figs. 11(a), 11(b) and 11(c) are diagrams for explaining the operation of the two-beam interferometer type optical modulator by phasor;
Figs. 12(a), 12(b) and 12(c) are cross section diagrams showing the configuration of an LN optical modulator;
Fig. 13 is a block diagrams showing a conventional CS-RZ modulation transmitter;
Fig. 14 is a diagrams for explaining the operation of an LN modulator in a CS clock modulating section; and
Figs. 15(a), 15(b) and 15(c) are diagrams showing the vector trace of modulated output light with respect to the CS-RZ modulation, to which various prechirps are given.

### BEST MODE FOR CARRYING OUT THE INVENTION

### [First Embodiment]

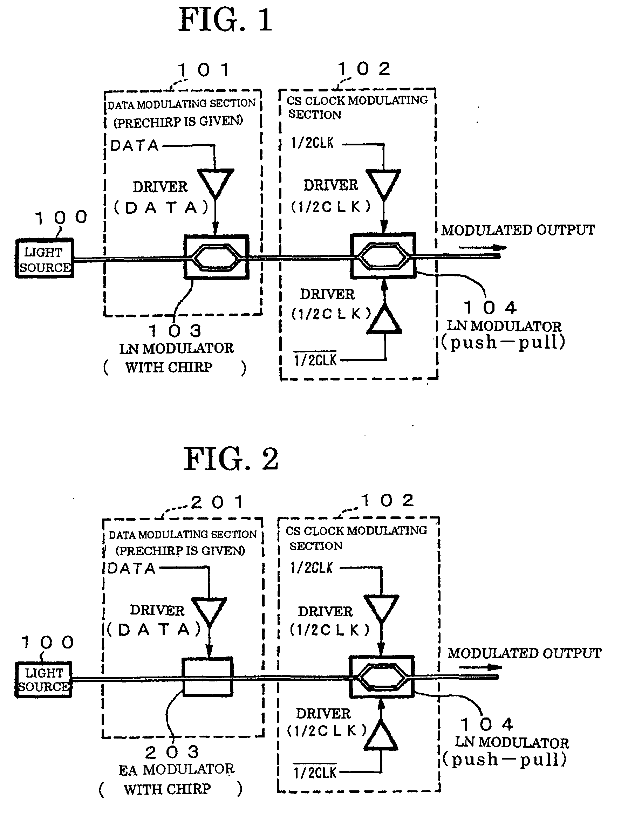

Fig. 1 is a block diagram showing the configuration of an optical transmitter according to the first embodiment of the present invention. First, light at a wavelength of 1.55µm emitted from a semiconductor laser as a light source 100 undergoes the NRZ modulation by a chirp-giving LN modulator 103 at a data modulating section 101. The light then undergoes the CS clock modulation by a push-pull type LN modulator 104 at a CS clock modulating section 102. The chirp-giving LN modulator 103 has the configuration depicted in Fig. 12(b).

In the conventional CS-RZ modulation, the data modulating section is provided with the two-input push-pull type LN modulator 133 that is capable of chirpless modulation. On the other hand, according to the present invention, the LN modulator 103 applies the chirp differently from the conventional method. Besides, while the two-input push-pull type LN modulator 133 requires a pair of complementary drive signals to start operations, the chirp-giving LN modulator 103 in general needs one input. This brings side benefits that the line of the drive signal is simplified, and the device can be produced at a lower cost.

Incidentally, according to the conventional CS-RZ moderation method, the data modulating section 131 is driven by electrical signals in the NRZ modulation format. Even though the NRZ modulation is adopted as a modulation format for the data modulating section 131, definitive light output turns out to be in the RZ modulation format by the CS clock modulation. Meanwhile, the data modulating section 101 of the present invention is not limited to adopting the NRZ modulation as its modulation format, and the RZ modulation format is also available. That is, the LN modulator 103 in the data modulating section 101 may be driven by electrical signals in the RZ modulation format.

### [Second Embodiment]

Fig. 2 is a block diagram showing the configuration of an optical transmitter according to the second embodiment of the present invention. In this embodiment, a data modulating section 201 is provided with an EA modulator 203 differently from the data modulating section 101 in the first embodiment. The letters EA stand for Electro-Absorption. This device serves as an optical shutter, which makes a change in the band gap of an optical semiconductor with applied electric field to take advantage of a change in absorption edge wavelength caused thereby.

When the EA modulator 203 changes the amount of absorption by applying electric field, generally, the refractive index also changes at the same time. Accordingly, the light passing through the modulator 203 undergoes a phase modulation, namely, the chirp. The direction of the chirp at the EA modulator 203 varies with reverse bias voltage superimposed on the drive signal. Generally, it continuously shifts in a counter- SPM direction when the bias voltage is small, and shifts in a SPM direction when the bias voltage is large. The bias point is, however, adjusted so that output signal light is favorably intensity-modulated, and cannot be set arbitrarily. For the present, the direction of the chirp at standard bias voltage in common EA modulators is opposite to that of SPM, which is convenient for implementing the present invention in a transmission line becoming a commonly used WDM communication fiber with a relatively large dispersion value.

The EA modulator 203 is similar to the semiconductor laser used as the light source 100 in composition and manufacturing process. Therefore, they can be integrally manufactured together. Such unified modulator and light source have already been in practical use, and make a big contribution to reductions in cost and the miniaturization of optical transmitters. While in the second embodiment, the integrated combination of the modulator 203 and light source 100 is not employed because of a high modulation rate of 40Gb/s and separate ones are used, it will be possible to use the integrated ones in the configuration of the optical transmitter according to the present invention.

Incidentally, the EA modulator 203 may also be driven by electrical signals in the RZ modulation format as well as the NRZ modulation format.

### [Third Embodiment]

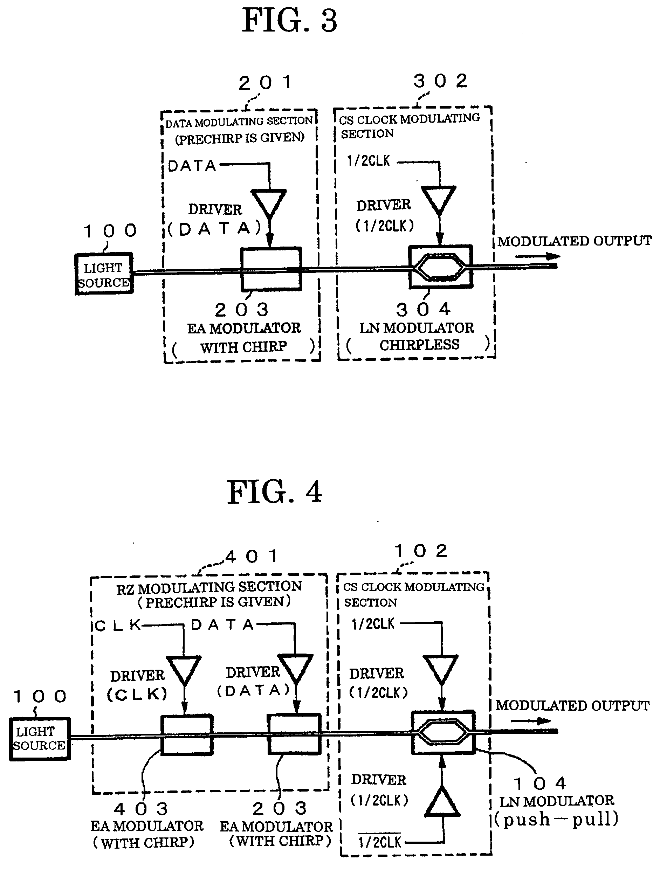

Fig. 3 is a block diagram showing the configuration of an optical transmitter according to the third embodiment of the present invention. In the first and second embodiments, the push-pull type LN modulator 104 that requires two electrical signal inputs is used as a chirpless optical modulator in the clock modulating section 102. On the other hand, in this embodiment, an LN modulator 304, which is capable of push-pull drive with one electrical signal input, is employed. By virtue of this construction, there is no need to coordinate the phases and amplitudes of a pair of complementary drive signals, and reductions in cost can be realized.

The LN modulator 304 can perform push-pull drive with one drive signal input since electric field generated by the input signal is applied to two arms of the interferometer in opposite phases as shown in Fig. 12(c). The two-input type LN modulator 104 used in the first and second embodiments can carry out different phase modulations at the respective arms with two input signals, and is capable of variable combinations of modulations other than the push-pull drive. However, when the usage of the modulator is limited to the push-pull drive which only requires opposite phase modulations, the configuration of the device can be largely simplified.

Although the one-input type chirpless modulator including an "X (Y) axis-cut, Y (X) axis-propagation" substrate as shown in Fig. 12(c) has been known, it has been barely commercially available because of difficulty in manufacturing the LN substrate. Meanwhile, "Z axis-cut, X (Y) axis-propagation" substrate as shown in Figs. 12(a) and 12(b) has been mainly utilized. In addition, the one-input type chirpless modulator including an "X (Y) axis-cut, Y (X) axis-propagation" substrate has not been employed for generating CS clock signals.

The CS clock modulating section 302 provided with the one-input type chirpless LN modulator 304 and a one-input type chirp-giving data modulating section (e.g. the LN modulator 103 in Fig. 1 or the EA modulator 203 in Figs. 2 and 3) makes the most simple combination and requires one DATA signal and one clock signal (its frequency is a half of bit rate frequency) as drive signals. This configuration saves points that need adjustment, and is highly practical.

### [Fourth Embodiment]

Fig. 4 is a block diagram showing the configuration of an optical transmitter according to the fourth embodiment of the present invention. This embodiment is characterized in that the device further includes an EA modulator 403 that is driven by a clock signal of bit rate frequency for setting the modulation to the RZ modulation format.

While in the first to third embodiments, a data electrical signal itself is arranged in the RZ modulation format to adopt the RZ modulation as the modulation format for the data modulating section, it is also possible to separate roles and use the modulator 203 for data modulation and the modulator 403 for clock modulation.

This construction solves the problem in the RZ modulation format that it is rather difficult to realize an electric circuit because the waveform of an electrical signal in the RZ format is not vertically symmetrical in the direction of amplitude and a wider band is used as compared to the NRZ modulation format. Moreover, freedoms of choice of pulse width, pulse form, etc. are broadened by separately providing the modulator 403 for setting the modulation to the RZ modulation format. Additionally, when employing the modulator 403 that exclusively conducts RZ modulation methodizing, the chirp in a direction opposite to SPM may be given by the modulator.

Next, a description will be given of the extent of improvement in transmission characteristics brought by the improved CS-RZ modulation signals obtained in the first to fourth embodiments.

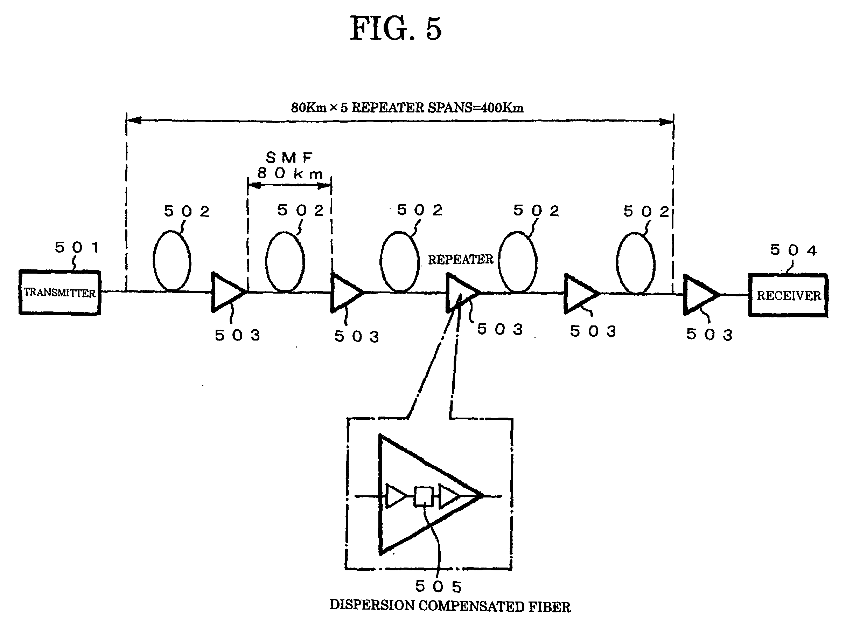

Fig. 5 is a block diagram showing a model of a transmission system for simulating the embodiments of the present invention. In the following simulation, the present invention is applied to an optical transmission system with a bit rate of 40Gb/s, a signal light wavelength of 1.55µm, and a transmission distance of 80km × 6 repeater spans. As for the transmission line in the system, a dispersion-arranged transmission line is employed. In the dispersion-arranged transmission line, SMF is used as line fibers 502, and a dispersion compensating fiber 505 is used as a dispersion compensating device in a repeater 503. With this construction, while the local chromatic dispersion in the signal band is non zero, the amount of cumulative chromatic dispersion from a transmitter 501 to a receiver 504 is approximately zero. The transmission line runs the length of SMF-80km × 6 repeater spans: 480km. The input power to the dispersion compensating fiber 505 in the repeater 503 is set to -10dB lower than SMF input power (horizontal axis).

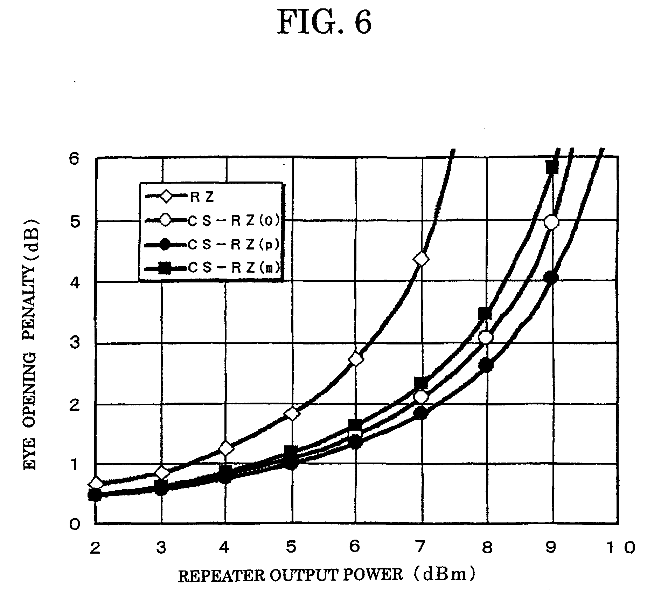

In the following, a description will be give of the effect of the present invention based on the result of a computer simulation by which the SPM-GVD phenomenon can be faithfully demonstrated. Fig. 6 is a graph showing experimental results of the relationship between repeater output and waveform distortion in the respective modulation methods. The horizontal axis is a repeater output power (dBm) scale, the vertical axis is an area scale for eye opening immediately after a transmitter as a reference. In Fig. 6, CS-RZ (0), CS-RZ (p), and CS- RZ (m) indicate the types of modulation in terms of chirp. CS-RZ (0) represents chirpless modulation (prior art), CS-RZ (p) represents modulation with the chirp in a counter-SPM direction, and CS-RZ (m) represents modulation with the chirp in a SPM direction.

It is observed that the eye is getting more deformed due to the SPM-GVD degradation as the repeater output power gets high. In the view of the differences among modulation methods, the method being most apt to induce the degradation is the RZ modulation, followed by the CS- RZ (m) modulation, CS-RZ (0) modulation, and CS-RZ (p) modulation improved by the present invention in this order.

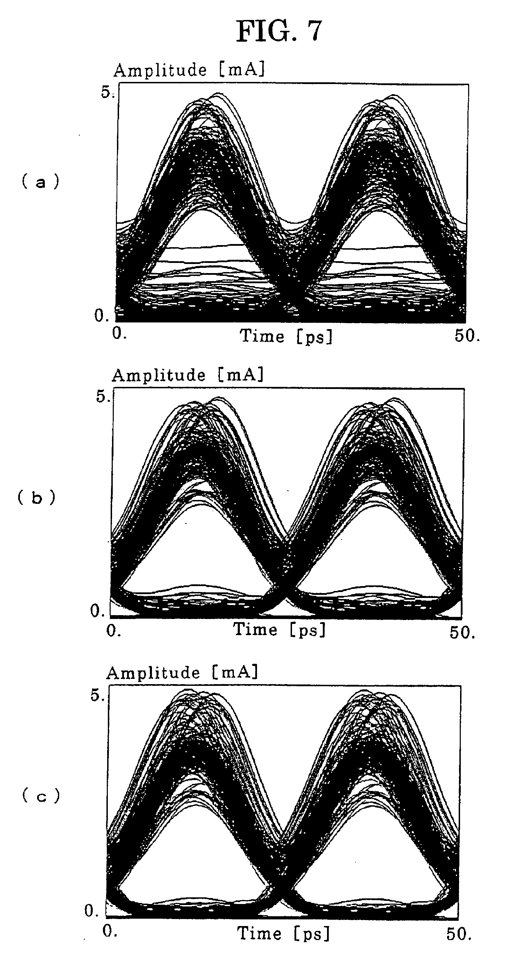

Figs. 7(a), 7(b) and 7(c) are graphs showing eye patterns at the repeater output power of +9dBm with respect to the RZ modulation, CS-RZ (0) modulation and CS-RZ (p) modulation, respectively. Extensive improvement is achieved by adopting the CS-RZ modulation instead of the RZ modulation. Moreover, noise at 0 level is improved by performing the chirp in a counter- SPM direction at the data modulating section. Provided that tolerable eye opening penalty is 2dB, the maximum output power value is improved by approximately 1.6dB when the RZ modulation is replaced by the CS-RZ modulation. In addition, with the chirp-giving CS-RZ modulation, the maximum output power value is further improved by approximately 0.4dB. That is, when adopting the chirp-giving CS-RZ modulation instead of the RZ modulation, the maximum output power value is improved by approximately 2dB, which represents a transmission loss of 10km, and an increase of 12.5% in terms of transmission distance percentage.

For the purpose of confirmation, it is also given of the result in the case of the chirp in a SPM direction. The result shows that the degradation is more easily induced in this case than in the case of the chirpless modulation.

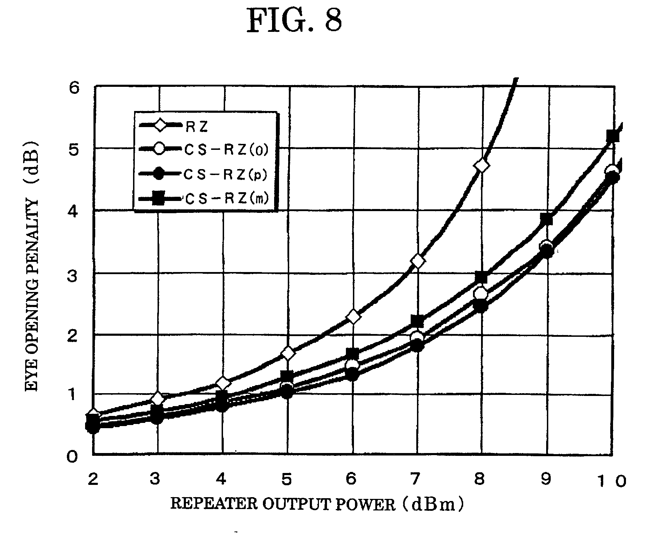

Fig. 8 is a graph as with Fig. 6, but for showing simulation results when the polarity of fiber dispersion is reversed. There is no such fiber in a practical sense. However, it is possible to perform a thought experiment by a simulation. In comparison with Fig. 6, there is less degradation in every modulation method. Accordingly, less improvement results are achieved when replacing the CS-RZ modulation with the chirp-giving CS-RZ modulation. Herewith, it turns out that the present invention is especially effective in the case where the dispersion of a transmission fiber producing nonlinear effect is the abnormal dispersion. Incidentally, the chirp in a counter- SPM direction displays superiority also in this case.

As is described above, the optimum direction of the chirp is opposite to the direction of SPM at a local dispersion value of ± 16ps/ nm/ km. Fig. 9 is a graph showing simulation results at another local dispersion value. In Fig. 9, CS-RZ (0), CS-RZ (p), and CS- RZ (m) indicate the types of modulation in terms of chirp. CS-RZ (0) represents chirpless modulation (prior art), CS-RZ (p) represents modulation with the chirp in a counter- SPM direction, and CS-RZ (m) represents modulation with the chirp in a SPM direction.

Fig. 9 shows that the improvement factor of the CS-RZ modulation over the RZ modulation is especially extensive in the range where the absolute value of the local dispersion exceeds 6ps/ nm/ km. Additionally, the CS-RZ modulation with the chirp in a counter- SPM direction displays best results almost everywhere in the range.

While preferred embodiments of the present invention have been described, such description is for illustrative purpose only, and it is to be understood that changes and variations may be made without departing from the spirit or scope of the invention.

For example, any type of optical intensity modulator which applies the prechirp in a counter-SPM direction may be employed for the data modulating section as well as the chirp-giving LN modulator or EA modulator. It is also possible to use the combination of modulators, one for performing intensity modulation, and the other for phase modulation. Besides, a carrier may be prechirped at the light source through a direct modulation technique for producing the prechirp by superimposing a clock frequency signal on the drive current of the semiconductor laser light source.

While the one-input or two-input driven push-pull type LN modulator is used for the CS clock modulating section in the above embodiments, any modulator configuration, in which the phase is reversed with respect to each bit without chirp, may be employed.

In the above embodiments, LN (LiNbO₃) is used as material for realizing the two-beam interferometer type modulator. However, the modulator is not limited to this structure, and may be realized by building up a waveguide and a modulator on an optical semiconductor substrate. This example has been disclosed in the report, C Rolland et al., "10Gbit/ s, 1.56µm multiquantum well InP/ InGaAsP Mach-Zehnder optical modulator", Electron. Lett., p. 471, 1993. In addition, a two-beam interferometer may be combined with a phase modulator by bulk material.

Besides, while the CS clock modulation is carried out after the data modulation in the above embodiments, it is natural that the same result can be obtained if the order is reversed.

The waveform of the drive signal for the CS clock modulating section is not limited to absolute sinusoidal wave. Essential effect is not ruined with distorted sinusoidal wave or rectangular wave if only the signal is provided with a half of bit rate frequency.

While, in the above embodiments, one wavelength is used in transmission, the essential effect of the present invention is not ruined by using the wavelength-division multiplexing together.

Furthermore, while SMF is employed as a line fiber in the above embodiments, the essential effect of the present invention is not ruined with a line fiber having different chromatic dispersion characteristics.

### INDUSTRIAL APPLICABILITY

As set forth hereinabove, in accordance with the present invention, it is possible to obtain modulation signals with higher SPM-GVD resistance as compared to the conventional CS-RZ modulation, thus enabling an increase in transmission distance and an improvement in code error rate in optical transmission systems whose performance is constrained by SPM-GVD.

## Claims

1. An optical transmitter comprising:
a carrier source;
a data modulating section for intensity-modulating the carrier with a data signal; and
a clock modulating section for amplitude-modulating the carrier so that the phase of the carrier is inverted for every one-bit slot of the data signal; wherein:
the carrier is given a prechirp by the carrier source or the data modulating section.

2. The optical transmitter claimed in claim 1, wherein the direction of the prechirp is opposite to that of a chirp resulting from self-phase modulation effect produced in an optical fiber line.

3. The optical transmitter claimed in claim 1 or 2, wherein the waveform of the data signal is in conformity with the NRZ (Non- Return to Zero) modulation format.

4. The optical transmitter claimed in claim 1 or 2, wherein the waveform of the data signal is in conformity with the RZ (Return to Zero) modulation format.

5. The optical transmitter claimed in one of claims 1 to 4, wherein the data modulating section includes a chirp-giving two-beam interferometer type optical modulator.

6. The optical transmitter claimed in claim 5, wherein the chirp-giving two-beam interferometer type optical modulator is built up on a LiNbO₃ substrate.

7. The optical transmitter claimed in claim 5, wherein the chirp-giving two-beam interferometer type optical modulator is built up on an optical semiconductor substrate.

8. The optical transmitter claimed in one of claims 1 to 4, wherein the data modulating section includes a chirp-giving electroabsorption (EA) intensity modulator.

9. The optical transmitter claimed in one of claims 1 to 8, wherein the clock modulating section includes a push-pull-driven two-beam interferometer type optical modulator.

10. The optical transmitter claimed in claim 9, wherein the push-pull-driven two-beam interferometer type optical modulator is built up on a LiNbO₃ substrate.

11. The optical transmitter claimed in claim 9, wherein the push-pull-driven two-beam interferometer type optical modulator is built up on an optical semiconductor substrate.

12. An optical fiber transmission system, which is an optical amplifying relay transmission system comprising: the optical transmitter claimed in one of claims 1 to 11; optical fibers for transmitting light projected from the optical transmitter; optical amplifying repeaters for relaying the light between the optical fibers; and an optical receiver for receiving the light transmitted through the optical fibers; wherein the local chromatic dispersion with respect to the wavelength of signal light in the optical fibers is non zero; and a dispersion-arranged transmission line, which is controlled so that the amount of cumulative chromatic dispersion from the optical transmitter to the optical receiver is approximately zero, is adopted.
